# EUROPÄISCHE PATENTSCHRIFT

(11) **EP 2 885 860 B1**
(45) Veröffentlichungstag und Bekanntmachung des Hinweises auf die Patenterteilung: **28.12.2016**
(21) Anmeldenummer: 12775192.3
(22) Anmeldetag: 27.09.2012
(51) Int. Cl.: H02J 3/38

(54) **ELEKTRISCHE EINRICHTUNG MIT VERRINGERTER ISOLATIONSSTRECKE**
ELECTRICAL DEVICE WITH A REDUCED ISOLATION GAP
DISPOSITIF ÉLECTRIQUE À SECTION D'ISOLATION RÉDUITE

(43) Veröffentlichungstag der Anmeldung: 24.06.2015
(73) Patentinhaber: Siemens Aktiengesellschaft, 80333 München (DE)
(72) Erfinder: MEIER, Timon, 09456 Mildenau (DE); GRAUPNER, Dirk, 08393 Meerane (DE); MAUERSBERGER, Markus, 09126 Chemnitz (DE); WOHLRAB, Nico, 09432 Großolbersdorf (DE)
(86) Internationale Anmeldenummer: PCT/EP2012/069082
(87) Internationale Veröffentlichungsnummer: WO 2014/048476

(56) Entgegenhaltungen:
- EP-A1- 2 180 586
- EP-A2- 1 143 594

## Beschreibung

Die Erfindung betrifft eine elektrische Einrichtung mit mindestens zwei hinsichtlich der Isolationsart unterschiedlichen Stromkreisen.

Derartige elektrische Einrichtungen, wie z.B. Photovoltaik-Wechselrichter, gehören seit langem zum Stand der Technik. Für diese regelt die Norm IEC 62109-1 u.a. die anzuwendenden Luft- und Kriechstrecken. Diese sind für Isolationsspannungen von > 1.000 V extrem groß und daher mit erhöhtem Aufwand einzuhalten. Um bisher die Isolationsstrecke von niedrigen Potenzialen zum Spannungszwischenkreis einzuhalten, werden nach Norm sehr große Luft- und Kriechstrecken erforderlich.

Die einschlägige Norm IEC 62109-1 unterscheidet grundlegend drei verschiedene bestimmende Spannungsklassifizierungen (DVC) A, B und C, die nach der Norm entsprechend ihrer Spannungshöhe definiert sind. Die Länge der Kriechstrecken für die Basisisolierung und die verstärkte Isolierung ist abhängig von der Höhe der Betriebsspannung wie das folgende Beispiel für Leiterplatten und einen Verschmutzungsgrad 2 zeigt.

| **Isolierungsart** | Kriechstrecke |
|---|---|
| Betriebsspannung 800 V DC | |
| Basisisolierung (BI) | 8 mm |
| Verstärkte Isolierung (RI) | 16 mm |

| **Betriebsspannung 1600 V DC** | |
|---|---|
| Basisisolierung (BI) | 16 mm |
| Verstärkte Isolierung (RI) | 32 mm |

EP 2 180 586 A1 offenbart eine Umrichterschaltung mit zwei Stromkreisen, in diesem Fall zwei Reihenumrichterstufen, die mit einem Transformator verbunden sind. Durch einen ersten und zweiten Wechselrichter und einen Transformator ist der Gleichstromeingang von dem Wechselstromausgang isoliert.

Der Erfindung liegt die Aufgabe zugrunde, eine elektrische Einrichtung der oben genannten Art vorzuschlagen, bei der die Luft- und Kriechstrecken bei Einhaltung der Norm reduziert sind.

Die Aufgabe wird mit den Merkmalen nach Anspruch 1 gelöst. Dabei ist die Trennstrecke zwischen den beiden Stromkreisen durch mindestens eine Trennstelle mit einem Zwischenpotenzial aufgeteilt, wobei das Zwischenpotenzial derart festgelegt ist, dass es zwischen den Potenzialen der beiden Stromkreise liegt.

Eine besonders vorteilhafte Ausführungsform der Erfindung besteht nach Anspruch 2, wenn das Zwischenpotenzial der Trennstelle durch Verbindung mit dem Stromkreis, der die höhere Isolationsart der beiden Stromkreise aufweist, geschaffen ist, indem ein Abgriff einer Teilspannung dieses Stromkreises erfolgt.

Vorteilhaft ist es außerdem, wenn die elektrische Einrichtung als Photovoltaik-Wechselrichter ausgeführt ist.

Eine weitere vorteilhafte Ausführungsform der Erfindung besteht, wenn der Photovoltaik-Wechselrichter an seinem Gleichspannungseingang mit den Klemmen eine Reihenschaltung aus mindestens zwei Kondensatoren aufweist, wobei die Reihenschaltung bei Anschluss eines speisenden Gleichstromnetzes einen Verbindungspunkt mit einem Zwischenpotenzial aufweist, das zwischen den Potenzialen des speisenden Gleichstromnetzes liegt, und wenn der Photovoltaik-Wechselrichter mindestens ein Leistungsteil mit Halbleiterschaltelementen sowie Treiber zur Ansteuerung der Halbleiterschaltelemente aufweist, wobei die Treiber jeweils mit einer Treiberstromversorgung verbunden sind und die Treiberstromversorgung einen ersten Treiberstromversorgungs-Transformator aufweist, dessen hochspannungsseitige Sekundärwicklung als Trennstelle mit dem Verbindungspunkt zwischen den in Reihe geschalteten Kondensatoren verbunden ist und dessen Zwischenpotenzial aufweist, wobei die Reihenschaltung aus den Kondensatoren, der Leistungsteil und die Treiber zum Stromkreis mit der höheren Isolationsart gehören und die Treiberstrom-Versorgung zum Stromkreis mit der niedrigeren Isolationsart.

Weitere vorteilhafte Ausführungsformen sind den Ansprüchen 5 bis 10 zu entnehmen.

Ein Ausführungsbeispiel der Erfindung wird im Folgenden anhand einer Zeichnung erläutert. Es zeigen:
- FIG 1: eine erfindungsgemäße elektrische Einrichtung mit verringerter Trennstrecke und
- FIG 2: einen erfindungsgemäßen elektrischen PhotovoltaikWechselrichter mit verringerter Trennstrecke.

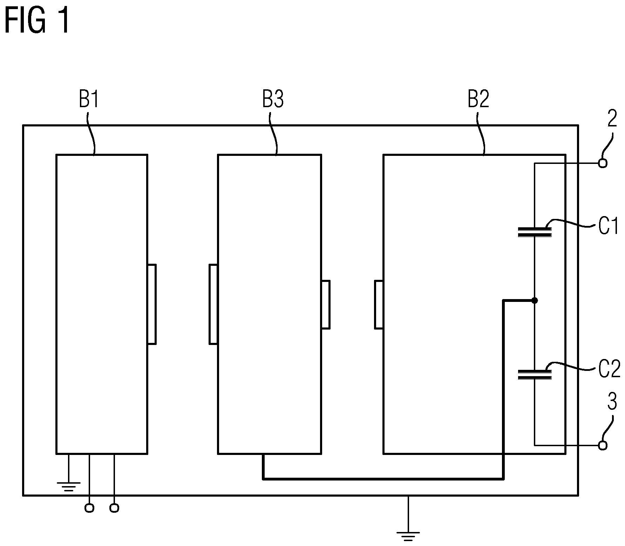

In FIG 1 ist eine erfindungsgemäße elektrische Einrichtung schematisch anhand von drei Blöcken B1,B2 und B3 dargestellt. Dabei repräsentieren die Blöcke B1 und B2 zwei hinsichtlich der Isolationsart unterschiedliche Stromkreise. Die Trennstrecke zwischen den beiden Stromkreisen ist hier durch eine Trennstelle, hier als Block B3 dargestellt, mit einem Zwischenpotenzial aufgeteilt ist, wobei das Zwischenpotenzial derart festgelegt ist, dass es zwischen den Potenzialen der beiden Stromkreise liegt. Der durch den Block B2 wiedergegebene Stromkreis mit der höheren Isolationsart weist einen Gleichspannungseingang mit den Klemmen 2,3 auf, an den eine Reihenschaltung aus zwei Kondensatoren C1,C2 angeschlossen ist. Es erfolgt ein Abgriff einer Teilspannung am Verbindungspunkt der beiden Kondensatoren C1,C2, der direkt mit der durch Block B3 repräsentierten Trennstelle verbunden ist, so dass an dieser ein Zwischenpotenzial anliegt.

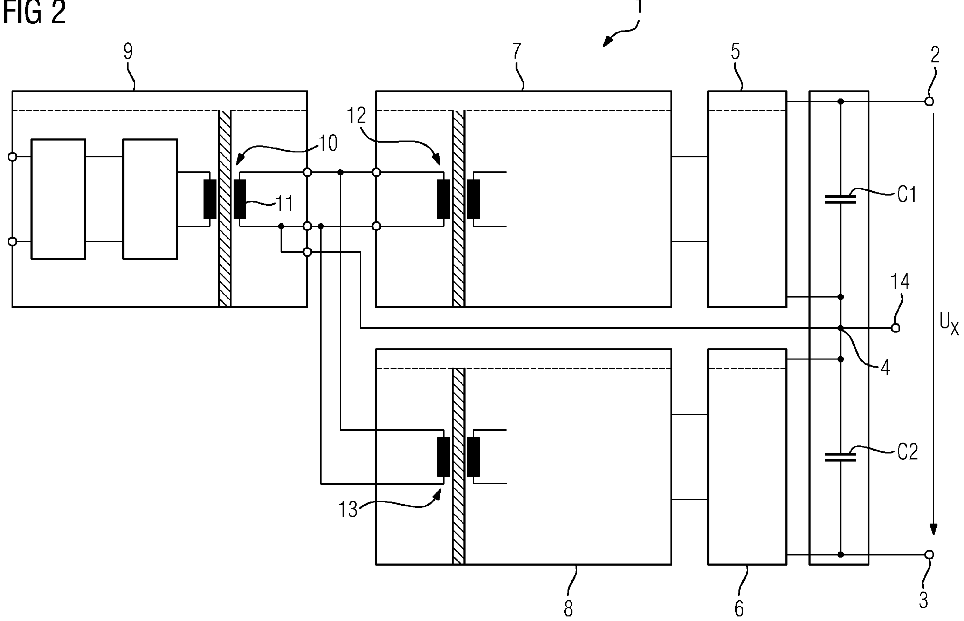

In FIG 2 ist eine als Photovoltaik-Wechselrichter 1 ausgeführte elektrische Einrichtung dargestellt. Der erfindungsgemäß ausgeführte Photovoltaik-Wechselrichter 1 weist die Klemmen 2 und 3 am Gleichspannungseingang auf, an dem eine Reihenschaltung aus zwei gleichen Kondensatoren C1 und C2 anliegt, wobei auch weitere Kondensatoren dazu in Reihe liegen können. Diese Reihenschaltung besitzt einen Verbindungspunkt 4, der bei Anschluss eines speisenden Gleichstromnetzes ein Zwischenpotenzial aufweist, das zwischen den Potenzialen des speisenden Gleichstromnetzes liegt.

Bei einer Spannung von U_{X} zwischen den Polen des einspeisenden Gleichstromnetzes beträgt die Spannungs-Differenz des Verbindungspunktes 4 maximal U_{X}/2 von dem geerdeten Pol, z.B. der geerdeten Klemme 14, die an den Verbindungspunkt 4 angeschlossen ist. Der Photovoltaik-Wechselrichter 1 weist Leistungsteile 5 und 6 mit als IGBTs ausgeführten Halbleiterschaltelementen sowie Treiber 7 und 8 zur Ansteuerung der Halbleiterschaltelemente auf.

Die Treiber 7 und 8 sind jeweils mit einer Treiber-Stromversorgung 9 verbunden. Die Treiberstrom-Versorgung 9 weist einen ersten Treiberstromversorgungs-Transformator 10 auf, dessen hochspannungsseitige Sekundärwicklung 11 mit dem Verbindungspunkt 4 zwischen den in Reihe geschalteten Kondensatoren C1 und C2 verbunden ist. Weiterhin sind an die Sekundärwicklung 11 ein zweiter 12 und dritter Treiberstromversorgungs-Transformator 13 angeschlossen, die zur Stromversorgung der Treiber 7 bzw. 8 dienen.

Der erste Treiberstromversorgungs-Transformator 10 weist eine verstärkte Isolierung auf ein Zwischenpotenzial auf, das dem Potenzial am Verbindungspunkt 4 zwischen den in Reihe geschalteten Kondensatoren C1 und C2 entspricht sowie eine Basisisolierung gemäß der zwischen den Potenzialen des Gleichstromnetzes liegenden Spannung für den Fehlerfall, dass einer der Kondensatoren C1, C2 durchlegiert. Von dem Zwischenpotenzial des Verbindungspunktes 4 und der mit diesem verbundenen Primärwicklung des zweiten 12 und dritten Treiberstromversorgungs-Transformators 13 ist zur Sekundärwicklung und der daran angeschlossenen Schaltung eine Basisisolation von U_{X}/2 ausreichend.

Anstelle der verstärkten Isolierung des ersten Treiberstromversorgungs-Transformators 10 auf ein Zwischenpotenzial kann eine Aufteilung auf zwei Strecken mit Basisisolierung erfolgen.

Durch die beschriebenen Maßnahmen können die Luft- und Kriechstrecken bei Einhaltung der Norm reduziert werden. Beispielsweise ist bei der üblicherweise angewendeten Kriechstrecke einer beliebigen Spannung eine reduzierte oder anders aufgeteilte Kriechstrecke anwendbar.

Der Verbindungspunkt 4 muss nicht der Mittelpunkt des Zwischenkreises sein, d.h. das Potenzial muss nicht notwendigerweise die Hälfte der Spannung U_{X} betragen, sondern es ist auch ein anderes Potenzial zwischen den Maximalwerten des Zwischenkreises möglich, indem z.B. der erste oder dritte Abgriff von vier *in* Reihe geschalteten Kondensatoren gewählt wird.

## Patentansprüche

1. Elektrische Einrichtung mit mindestens zwei hinsichtlich der Isolationsart unterschiedlichen Stromkreisen (B1,B2), **dadurch gekennzeichnet, dass** die Trennstrecke zwischen den beiden Stromkreisen (B1,B2) durch mindestens eine Trennstelle (B3) mit einem Zwischenpotenzial aufgeteilt ist, wobei das Zwischenpotenzial derart festgelegt ist, dass es zwischen den Potenzialen der beiden Stromkreise (B1,B2) liegt.

2. Elektrische Einrichtung nach Anspruch 1, **dadurch gekennzeichnet, dass** das Zwischenpotenzial der Trennstelle (B3) durch Verbindung mit dem Stromkreis, der die höhere Isolationsart der beiden Stromkreise (B1,B2) aufweist, geschaffen ist, indem ein Abgriff einer Teilspannung dieses Stromkreises erfolgt.

3. Elektrische Einrichtung nach Anspruch 1 oder 2, **gekennzeichnet durch** eine Ausführung als Photovoltaik-Wechselrichter (1).

4. Elektrische Einrichtung nach Anspruch 3, **dadurch gekennzeichnet, dass** der Photovoltaik-Wechselrichter (1) an seinem Gleichspannungseingang mit den Klemmen (2,3) eine Reihenschaltung aus mindestens zwei Kondensatoren (C1,C2) aufweist, wobei die Reihenschaltung bei Anschluss eines speisenden Gleichstromnetzes einen Verbindungspunkt (4) mit einem Zwischenpotenzial aufweist, das zwischen den Potenzialen des speisenden Gleichstromnetzes liegt, und der mindestens ein Leistungsteil (5,6) mit Halbleiterschaltelementen sowie Treiber (7,8) zur Ansteuerung der Halbleiterschaltelemente aufweist, wobei die Treiber (7,8) jeweils mit einer TreiberStromversorgung (9) verbunden sind und die Treiberstrom-Versorgung (9) einen ersten Treiberstromversorgungs-Transformator (10) aufweist, **dadurch gekennzeichnet, dass** die hochspannungsseitige Sekundärwicklung (11) des ersten Treiberstromversorgungs-Transformators (10) mit dem Verbindungspunkt (4) zwischen den in Reihe geschalteten Kondensatoren (C1,C2) verbunden ist und dessen Zwischenpotenzial aufweist, wobei die Reihenschaltung aus den Kondensatoren (C1,C2), der Leistungsteil (5,6) und die Treiber (7,8) zum Stromkreis mit der höheren Isolationsart gehören und die Treiberstrom-Versorgung (9) zum Stromkreis mit der niedrigeren Isolationsart gehört.

5. Elektrische Einrichtung nach Anspruch 4, **dadurch gekennzeichnet, dass** der erste Treiberstromversorgungs-Transformator (10) eine verstärkte Isolierung von einem Niederspannungspotenzial auf ein Zwischenpotenzial aufweist, das dem Potenzial am Verbindungspunkt (4) zwischen den in Reihe geschalteten Kondensatoren (C1,C2) entspricht.

6. Elektrische Einrichtung nach Anspruch 4 oder 5, **dadurch gekennzeichnet, dass** der erste Treiberstromversorgungs-Transformator (10) eine Basisisolierung gemäß der zwischen den Potenzialen des Gleichstromnetzes liegenden Spannung aufweist.

7. Elektrische Einrichtung nach einem der vorangehenden Ansprüche 4 bis 6, **dadurch gekennzeichnet, dass** jeweils dem ersten Treiberstromversorgungs-Transformator (10) ein zweiter (12) und dritter Treiberstromversorgungs-Transformator (13) nachgeschaltet ist, die beide jeweils eine Basisisolierung auf das Zwischenpotenzial aufweisen, das dem Potenzial am Verbindungspunkt (4) zwischen den in Reihe geschalteten Kondensatoren (C1,C2) entspricht.

8. Elektrische Einrichtung nach einem der vorangehenden Ansprüche 4 bis 7, **dadurch gekennzeichnet, dass** eine der Klemmen (2,3) am Gleichspannungseingang mit Erdpotenzial verbunden ist.

9. Elektrische Einrichtung nach einem der vorangehenden Ansprüche 4 bis 8, **dadurch gekennzeichnet, dass** die Halbleiterschaltelemente als IGBTs ausgeführt sind.

10. Elektrische Einrichtung nach einem der vorangehenden Ansprüche 4 bis 9, **dadurch gekennzeichnet, dass** die Isolierung des ersten Treiberstromversorgungs-Transformators (10) auf das Zwischenpotenzial durch Aufteilung auf zwei Strecken mit Basisisolierung erfolgt.

## Claims

1. Electrical device comprising at least two electrical circuits (B1, B2) which differ with regard to the type of insulation, **characterized in that** the isolating section between the two electrical circuits (B1, B2) is divided by at least one isolating point (B3) having an intermediate potential, the intermediate potential being divided in such a way that it lies between the potentials of the two electrical circuits (B1, B2).

2. Electrical device according to Claim 1, **characterized in that** the intermediate potential of the isolating point (B3) is created by connection to the electrical circuit which has the higher type of insulation of the two electrical circuits (B1, B2), by a partial voltage of these electrical circuits being tapped.

3. Electrical device according to Claim 1 or 2, **characterized by** an embodiment as a photovoltaic inverter (1).

4. Electrical device according to Claim 3, **characterized in that** the photovoltaic inverter (1) has, at its DC voltage input having the terminals (2, 3) a series connection from at least two capacitors (C1, C2), wherein, when a feeding DC grid is connected, the series connection has a junction point (4) having an intermediate potential which lies between the potentials of the feeding DC grid, and said photovoltaic inverter has least one power portion (5, 6) comprising semiconductor switching elements and also drivers (7, 8) for driving the semiconductor switching elements, wherein the drivers (7, 8) are in each case connected to a driver power supply (9), and the driver power supply (9) has a first driver power supply transformer (10), **characterized in that** the high-voltage-side secondary winding (11) of the first driver power supply transformer (10) is connected to the junction point (4) between the series-connected capacitors (C1, C2) and has the intermediate potential of said junction point, wherein the series connection formed from the capacitors (C1, C2), the power portion (5, 6) and the drivers (7, 8) belong to the electrical circuit having the higher type of insulation, and the driver power supply (9) belongs to the electrical circuit having the lower type of insulation.

5. Electrical device according to Claim 4, **characterized in that** the first driver power supply transformer (10) has a reinforced insulation from a low-voltage potential to an intermediate potential which corresponds to the potential at the junction point (4) between the series-connected capacitors (C1, C2).

6. Electrical device according to Claim 4 or 5, **characterized in that** the first driver power supply transformer (10) has a basic insulation in accordance with the voltage lying between the potentials of the DC grid.

7. Electrical device according to any of the preceding Claims 4 to 6, **characterized in that** a second (12) and third driver power supply transformer (13) are in each case connected downstream of the first driver power supply transformer (10) and both have in each case a basic insulation to the intermediate potential which corresponds to the potential at the junction point (4) between the series-connected capacitors (C1, C2).

8. Electrical device according to any of the preceding Claims 4 to 7, **characterized in that** one of the terminals (2, 3) at the DC voltage input is connected to earth potential.

9. Electrical device according to any of the preceding Claims 4 to 8, **characterized in that** the semiconductor switching elements are embodied as IGBTs.

10. Electrical device according to any of the preceding Claims 4 to 9, **characterized in that** the insulation of the first driver power supply transformer (10) to the intermediate potential is effected by division into two sections having basic insulation.

## Revendications

1. Dispositif électrique ayant au moins deux circuits (B1, B2) différents en ce qui concerne le type d'isolation, **caractérisé en ce que** la section de coupure entre les deux circuits (B1, B2) est séparée par au moins un point (B3) de coupure ayant un potentiel intermédiaire, le potentiel intermédiaire étant fixé de manière à se trouver entre les potentiels des deux circuits (B1, B2).

2. Dispositif électrique suivant la revendication 1, **caractérisé en ce que** le potentiel intermédiaire du point (B3) de coupure est créé par liaison avec le circuit qui a le type d'isolation la plus grande des deux circuits (B1, B2), en effectuant une prise d'une tension partielle de ce circuit.

3. Dispositif électrique suivant les revendications 1 ou 2, **caractérisé par** une exécution en onduleur (1) photovoltaïque.

4. Dispositif électrique suivant la revendication 3, caractérisé en que l'onduleur (1) photovoltaïque a, sur son entrée de tension continue ayant les bornes (2, 3), un circuit série composé d'au moins deux condensateurs (C1, C2), le circuit série ayant, lors du raccordement d'un réseau de courant continu d'alimentation, un point (4) de liaison ayant un potentiel intermédiaire, qui se trouve entre les potentiels du réseau de courant continu d'alimentation et la au moins une partie (5, 6) de puissance a des éléments de commutation à semiconducteur ainsi que des circuits (7, 8) d'attaque des éléments de commutation à semiconducteur, les circuits (7, 8) d'attaque étant reliés respectivement à une alimentation (9) en courant des circuits d'attaque et l'alimentation (9) en courant des circuits d'attaque ayant un premier transformateur (10) d'alimentation en courant des circuits d'attaque, **caractérisé en ce que** l'enroulement (11) secondaire du côté de la haute tension du premier transformateur (10) d'alimentation en courant des circuits d'attaque est relié au point (4) de liaison entre les condensateurs (C1, C2) montés en série et a son potentiel intermédiaire, le circuit série composé des condensateurs (C1, C2), la partie (5, 6) de puissance et les circuits (7, 8) d'attaque appartenant aux circuits ayant le type d'isolation la plus grande, et l'alimentation (9) en courant des circuits d'attaque aux circuits ayant le type d'isolation la plus petite.

5. Dispositif électrique suivant la revendication 4, **caractérisé en ce que** le premier transformateur (10) d'alimentation en courant des circuits d'attaque a une isolation renforcée d'un potentiel de basse tension à un potentiel intermédiaire, qui correspond au potentiel au point (4) de liaison entre les condensateurs (C1, C2) montés en série.

6. Dispositif électrique suivant les revendications 4 ou 5, **caractérisé en ce que** le premier transformateur (10) d'alimentation en courant des circuits d'attaque a une isolation de base suivant la tension entre les potentiels du réseau de courant continu.

7. Dispositif électrique suivant l'une des revendications précédentes 4 à 6, **caractérisé en ce que** respectivement, en aval du premier transformateur (10) d'alimentation en courant des circuits d'attaque, sont montés un deuxième (12) et un troisième transformateurs (13) d'alimentation en courant des circuits d'attaque, qui ont tous deux respectivement une isolation de base jusqu'au potentiel intermédiaire, qui correspond au potentiel au point (4 ° de liaison entre les condensateurs (C1, C2) montés en série.

8. Dispositif électrique suivant l'une des revendications précédentes 4 à 7, **caractérisé en ce que** l'une des bornes (2, 3), à l'entrée de la tension continue est reliée au potentiel de terre.

9. Dispositif électrique suivant l'une des revendications précédentes 4 à 8, **caractérisé en ce que** les éléments de commutation à semiconducteur sont réalisés sous la forme d'IGBT.

10. Dispositif électrique suivant l'une des revendications précédentes 4 à 9, **caractérisé en ce que** l'isolation du premier transformateur (10) d'alimentation en courant s'effectue par l'isolation de base jusqu'au potentiel intermédiaire par répartition sur deux sections.
